# EUROPÄISCHE PATENTANMELDUNG

(11) **EP 0 992 911 A2**
(43) Veröffentlichungstag der Anmeldung: **12.04.2000**
(21) Anmeldenummer: 99117691.8
(22) Anmeldetag: 08.09.1999
(51) Int. Cl.: G06F 11/16

(54) **Verfahren und Schaltungsanordnung zur sicheren Überwachung von Taktraten in einem redundanten System**

(30) Priorität: 29.09.1998 DE 19844562
(71) Anmelder: Dr. Johannes Heidenhain GmbH, 83292 Traunreut (DE)
(72) Erfinder: Kerner, Norbert, Dipl.-Ing., 83374 Traunwalchen (DE); Schlick, Helmut, 83368 Weisbrunn (DE); Rauth, Michael, Dipl.-Ing., 83301 Traunreut (DE)

(57) **Zusammenfassung**

Zur Überwachung der Übereinstimmung zweier Taktraten wird vorgeschlagen von einem ersten Prozessor, dem ein erster Takt zugeleitet wird, einen Zähler mit diesem ersten Takt zählen zu lassen. Von einem zweiten Prozessor wird mit einem ihm zugeleiteten zweiten Takt ebenfalls ein Zähler gezählt. Die Zählerwerte der Zähler werden in bestimmten Zeitabständen von den Prozessoren in einem gemeinsamen Speicher abgespeichert. Anschließend laden die Prozessoren den Zählerwert eines anderen Prozessors und vergleichen diesen mit dem eigenen Zählerwert. Wird dabei festgestellt, daß die beiden Zählerwerte innerhalb eines Toleranzbereichs liegen, wird einer der Zählerwerte als Referenz für alle anderen Zähler benutzt und die anderen Zählerwerte an diesen Referenzwert angeglichen, so daß für die weitere Überwachung der Prozessoren von diesem Referenzwert für den jeweiligen Zähler ausgegangen wird. Liegen ein Zählerwert außerhalb des Toleranzbereichs, wird ein Fehler ausgelöst.

## Beschreibung

Die Erfindung betrifft ein Verfahren zur sicheren Überwachung von Taktraten in einem redundanten System nach dem Oberbegriff des Anspruchs 1 und eine Schaltungsanordnung zur Durchführung des Verfahrens nach dem Oberbegriff des Anspruchs 7.

Aus der DE 38 32 800 C2 ist eine Anordnung zur signaltechnisch sicheren Überwachung eines zweikanalig sicheren Rechners gegen einseitiges Ausbleiben oder Wegdriften der Taktsignale bekannt. Dabei werden in jedem Rechnerkanal die jeweils invertierten Taktsignale auf Antivalenz durch ein zweikanaliges Steuerteil überwacht. Sobald festgestellt wird, daß die Taktsignale für den zweikanaligen Rechner nicht mehr antivalent sind, wird ein Schalter angesteuert, der zumindest die Versorgungsspannung für die Ausgabeports des Rechners unterbricht. Hierfür ist eine spezielle Relaisanordnung vorgesehen, die sicherstellt, daß nur bei fehlerfreien Taktsignalen der Schalter für die Versorgungsspannung der Rechnerkanäle geschlossen ist.

Diese Anordnung weist den Nachteil auf, daß die schaltungstechnische Realisierung durch Relais aufwendig und damit teuer ist und viel Platz erfordert. Weiterhin von Nachteil ist, daß bereits bei einer Phasenverschiebung der beiden Taktsignale von nur 180 Grad die Antivalenz der Taktsignale nicht mehr gegeben ist, so daß die Ausgabeports abgeschaltet werden. Eine derart geringe Drift der Taktsignalquellen ist, besonders bei langer Betriebsdauer, jedoch meist nur mit unverhältnismäßig großem technischen Aufwand zu verhindern. Außerdem ist eine derart geringe Drift der Taktsignalquellen für die korrekte Funktion des zweikanaligen Rechners unerheblich, so daß ein Abschalten bei einer derart geringen Abweichung über eine lange Betriebsdauer hinweg nicht erforderlich wäre.

Aus der DE 36 25 318 C2 ist eine Anordnung zur signaltechnisch sicheren Überwachung zweier Taktsignale bekannt, bei der die Taktsignale zeitversetzt zueinander sind und jeweils zugeordnete Monoflops ansteuern. Die Ausgangssignale der Monoflops werden an einen signaltechnisch sicheren Antivalenzvergleicher gelegt, dessen Ausgangssignal wiederum einem signaltechnisch sicheren RS-Speicher überwacht wird. Das Ausgangssignal des RS-Speichers steuert schließlich ein Schaltglied, das den Energie- oder Signalfluß abschalten kann.

Auch hier ist von Nachteil, daß bereits ein Phasenunterschied von 180 Grad in den beiden überwachten Taktsignalen eine Abschaltung des Energie- oder Signalflusses bewirkt. Eine derart geringe Abweichung in den beiden Taktsignalen ist besonders über längere Betriebsdauer nur mit großem Aufwand zu verhindern und führt meist nur zu einer geringen Verzögerung, nicht aber zu einem Fehler, der eine Abschaltung rechtfertigt.

Aus der EP 0 742 498 A2 ist ein Verfahren zur Einbeziehung von einkanaligem Programmcode in eine zweikanalige sicherheitsgerichtete Systemstruktur bekannt. Dabei wird in einem Kanal der zweikanaligen sicherheitsgerichteten Systemstruktur der einkanalige Programmcode aufgerufen und gleichzeitig in beiden Kanälen eine Überwachungsfunktion gestartet. Die beiden Überwachungsfunktionen beinhalten einen kreuzweise Daten- oder Ergebnisvergleich, bei dem das Ergebnis oder der ordnungsgemäße Ablauf des einkanaligen Programmcodes in beiden Kanälen unabhängig voneinander durch Lesen des Prozeßzustandes überprüft wird. Wird dabei festgestellt, daß sich die Prozeßzustände in beiden Kanälen unterscheiden, wird eine Fehlerreaktion ausgelöst.

Dieses Verfahren weist den Nachteil auf, daß lediglich die ordnungsgemäße Abarbeitung von Programmen überwacht werden kann. Eine Überwachung von Taktsignalen ist nicht vorgesehen.

Aus der EP 0 742 499 A2 ist ein Verfahren zum sicherem Verarbeiten von sicherheitsgerichteten Prozeßsignalen bekannt. Hierfür werden die zu überwachenden Prozeßsignale unabhängig an mindestens zwei ebenfalls unabhängige Rechner geleitet, wodurch zwei Überwachungskanäle gebildet werden. Danach werden die Prozeßsignale einer Eingangsverarbeitung unterzogen, bei der die Rechner einen kreuzweisen Ergebnis- und Datenvergleich durchführen. Dabei werden die Ausgangssignale der Eingangssignalverarbeitung in den Überwachungskanälen interpretiert und der kreuzweise Ergebnis- und Datenvergleich wird durchgeführt, anschließend werden vom Prozeßzustand abhängige Signale erzeugt. Schließlich erfolgt eine Ausgangssignalverarbeitung dieser Signale, bei der ebenfalls ein kreuzweiser Ergebnis- und Datenvergleich erfolgt. Die derart erzeugten Signale werden zur redundanten Ansteuerung sicherheitsrelevanter Parameter des Prozesses benutzt.

Dieses Verfahren weist den Nachteil auf, daß es sich zwar für die Überwachung von in einem Prozeß erzeugten Parametern eignet, eine Überwachung eines Taktsignals ist derart jedoch nicht möglich.

Aus der DIN V VDE 0801/01.90, 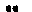 Grundsätze für Rechner in Systemen mit Sicherheitsaufgaben", Anhang Punkt B.2.1.6.2, ist bekannt, daß bei einem sicheren System auch der Takt überwacht werden muß. Dafür wird vorgeschlagen, daß eine sogenannte 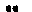 Watch-dog" Schaltung mit separater Zeitbasis oder bei einem mehrkanaligen System eine gegenseitige Überwachung durchgeführt wird.

Dabei wird nicht offenbart wie bei einem mehrkanaligen System eine gegenseitige Überwachung verfahrens- und schaltungstechnisch realisiert werden soll.

Aufgabe der vorliegenden Erfindung ist es daher, ein Verfahren und eine das Verfahren realisierende Schaltungsanordnung anzugeben, wodurch eine sichere Überwachung der Taktraten mindestens zweier Taktsignale ermöglicht wird. Für die Schaltungsanordnung sollen möglichst bereits vorhandene Baugruppen mitbenutzt werden. Weiterhin sollen geringe Abweichungen der Taktraten, die noch nicht zu einer Fehlfunktion führen, toleriert werden.

Diese Aufgabe wird durch ein Verfahren mit den Merkmalen des Anspruches 1 und eine Schaltungsanordnung mit den Merkmalen des Anspruchs 7 gelöst.

Vorteilhafte Ausführungsformen des erfindungsgemäßen Verfahrens und der erfindungsgemäßen Schaltungsanordnung ergeben sich aus den Merkmalen der jeweils abhängigen Patentansprüche.

Der Erfindung liegt zunächst die Erkenntnis zugrunde, daß in der Praxis viel zu häufig wegen abweichenden Taktraten eine Fehlerabschaltung eines zweikanaligen Systems erfolgt. Besonders bei langen Betriebsdauern über mehrere Tage hinweg können sich bereits geringe Phasenunterschiede der voneinander unabhängigen Taktgeberbaugruppen aufsummieren und eine Fehlerabschaltung wegen unterschiedlicher Taktraten bewirken. Dies ist jedoch unerwünscht, da ein derart geringer Unterschied in den beiden Taktgeberbaugruppen lediglich zu einer geringen Verzögerung im Bereich weniger Taktperioden führt, aber meist keinen unsicheren Betrieb zur Folge hat.

Zur Überwachung der Übereinstimmung der beiden Taktraten wird daher erfindungsgemäß von einem ersten Prozessor, dem ein erster Takt zugeleitet wird, ein Zähler mit diesem ersten Takt gezählt. Von dem zweiten Prozessor wird mit dem ihm zugeleiteten zweiten Takt ebenfalls ein Zähler gezählt. Die Zählerwerte der Zähler werden in bestimmten Zeitabständen von den zumindest zwei Prozessoren in einem für alle Prozessoren gemeinsamen Speicher abgespeichert. Anschließend laden die Prozessoren den Zählerwert eines anderen Prozessors und vergleichen diesen mit dem eigenen Zählerwert. Wird dabei festgestellt, daß die beiden Zählerwerte innerhalb eines Toleranzbereichs liegen, wird einer der Zählerwerte als Referenz für alle anderen Zähler benutzt und die anderen Zählerwerte an diesen Referenzwert angeglichen, so daß für die weitere Überwachung der Prozessoren von diesem Referenzwert für den jeweiligen Zähler ausgegangen wird. Liegt ein Zählerwert außerhalb des Toleranzbereichs, wird zweikanalig ein Fehler ausgelöst.

Auf diese Weise kann vorteilhaft zwischen einer nur geringen Abweichung zwischen den Taktgeberbaugruppen, die toleriert werden kann, und einem die Betriebssicherheit gefährdenden Unterschied der Taktraten unterschieden werden. Weiterhin wird eine nur geringe Abweichung der Taktraten ausgeglichen, so daß sich die Abweichung nicht über die Betriebsdauer aufsummieren kann. Derart wird eine qualitative Abschätzung der Abweichung zwischen den Taktgeberbaugruppen ermöglicht.

Einzelheiten und weitere Vorteile der Erfindung werden im folgenden anhand der in der Zeichnung dargestellten Ausführungsform näher erläutert. Es zeigt:
- Figur 1:: Eine mögliche Verfahrensabfolge des erfindungsgemäßen Verfahrens und
- Figur 2:: eine mögliche schaltungstechnische Realisierung der erfindungsgemäßen Schaltungsanordnung.

Im folgenden wird von einer Anwendung der Erfindung bei einer sicheren numerischen Steuerung für eine Werkzeugmaschine ausgegangen, die eine zweikanalige, sichere Struktur aufweist. In dieser Struktur sollen die Taktraten sicher überwacht werden.

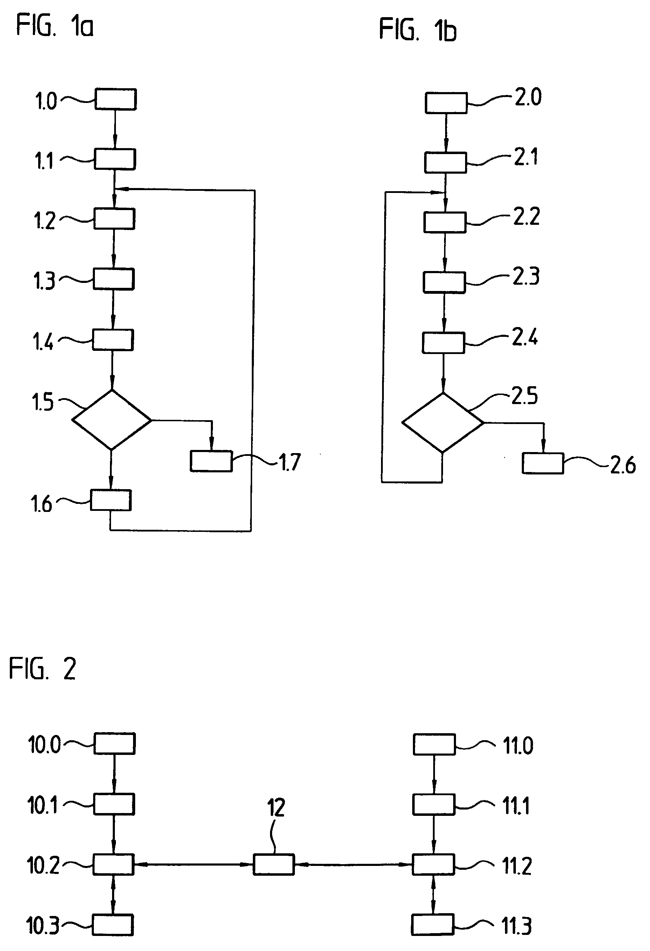

Gemäß Figur 1a wird in einem ersten Kanal der Steuerung, dem beispielsweise der MCU-Prozessor 10.2 zugeordnet ist, zunächst ein Taktsignal im Schrill 1.0 erzeugt. Dieses Taktsignal wird im Schritt 1.1 durch entsprechend eingestellte Teiler 10.1 in einer oder mehreren Stufen auf eine Taktrate heruntergeteilt, mit der ein Zähler 10.3 gezählt werden soll. Dieser Schritt 1.1 ist optional und kann auch an anderen Stellen der Verfahrensabfolge zusätzlich oder alternativ vorgesehen sein. Mit dem in Schrill 1.1 erzeugten Takt wird im Schrill 1.2 ein Zählerwert eines Zählers 10.3 um jeweils eins verändert. Dabei bleibt auch bei einem Zählerüberlauf aufgrund der verwendeten Modulo-Zählweise eine Differenzberechnung möglich. Der neueste Zählerwert wird im Schrill 1.3 in einem für beide Kanäle gemeinsamen Speicher 12 abgespeichert.

Wie in Figur 1b dargestellt wird auch im zweiten Kanal der Steuerung, dem dann der CCU-Prozessor 11.2 zugeordnet ist, in einem ersten Schrill 2.0 ein Taktsignal erzeugt. Dieses ist völlig unabhängig von dem im Schrill 1.0 erzeugten Taktsignal des ersten Kanals. Anschließend wird im Schrill 2.1 die Taktrate des erzeugten Taktsignals in einer oder in mehreren Stufen heruntergeteilt. Dieser Schrill 2.1 ist optional und kann auch an anderen Stellen der Verfahrensabfolge zusätzlich oder alternativ vorgesehen sein. Im Schritt 2.2 wird dann, wie im ersten Kanal, ein Zähler 11.3 mit der im Schrill 2.1 eingestellten Taktrate gezählt. Der neueste Zählerwert wird im Schritt 2.3 in einem für beide Kanäle gemeinsamen Speicher 12 an für beide Kanäle unterschiedlichen Speicherstellen abgespeichert.

Alternativ zur sofortigen Speicherung der Zählerwerte aus erstem und zweitem Kanal im gemeinsamen Speicher 12 besteht die Möglichkeit, daß zur Entlastung der Prozessoren 10.2 und 11.2 nur in bestimmten Zeitabständen die Zählerstände aus erstem und zweitem Kanal im Speicher 12 gespeichert werden. Dazu erfolgt eine zeitliche Triggerung des Speichervorgangs in beiden Prozessoren 10.2 und 11.2. Die dafür benötigte Zeitbasis kann in beiden Prozessoren 10.2 und 11.2 separat oder in nur einem der beiden Prozessoren 10.2 oder 11.2 integriert für beide Prozessoren oder extern durch eine Timer-Baugruppe erzeugt werden. Dadurch wird sichergestellt, daß die Zählerwerte der Taktraten beider Prozessoren 10.2 und 11.2 im wesentlichen gleichzeitig abgespeichert werden.

Anschließend wird, wie in Figur 1a dargestellt, durch den Prozessor 10.2 im ersten Kanal der Steuerung in Schritt 1.4 der Zählerwert des Prozessors 11.2 des anderen Kanals aus dem gemeinsamen Speicher 12 geladen und im Schrift 1.5 mit dem eigenen Zählerwert verglichen. Dabei wird die absolute Abweichung ins Verhältnis zum Zählerwert gesetzt, um eine prozentuale Abweichung zu erhalten. Liegt die derart ermittelte prozentuale Abweichung innerhalb eines voreingestellten Toleranzbereichs, liegt kein Fehler vor; wird der Toleranzbereich aber überschritten, wird eine Fehlerbehandlung ausgelöst.

Weichen die beiden Zählerstände über einen Toleranzbereich hinaus voneinander ab, wird eine Fehlerbehandlung durch den Prozessor 10.2 ausgelöst. Ansonsten wird im Schrill 1.6 der eingelesene Zählerwert des zweiten Kanals als Zählerwert für den ersten Kanal übernommen. Dadurch wird sichergestellt, daß geringfügige Abweichungen auch über längere Zeit nicht zu einer Fehlerbehandlung führen.

Figur 1b zeigt die im zweiten Kanal realisierte weitere Verfahrensweise, die im wesentlichen der im ersten Kanal entspricht. In Schritt 2.4 wird der Zählerwert des Prozessors 10.2 des anderen Kanals aus dem gemeinsamen Speicher 12 ausgelesen und im Schrill 2.5 mit dem eigenen Zählerwert verglichen. Auch im zweiten Kanal wird überprüft, ob die prozentuale Abweichung der Zählerwerte bis auf einen Toleranzbereich übereinstimmt. Wird der Toleranzbereich eingehalten, werden übereinstimmende Taktraten in beiden Kanälen und damit ein sicherer Betriebszustand erkannt. Wird aber erkannt, daß die beiden Taktraten in erstem und zweitem Kanal nicht mehr innerhalb des Toleranzbereichs liegen, wird im Schrift 2.6 eine Fehlerbehandlung durch den Prozessor 11.2 ausgelöst.

Bei einer Fehlerbehandlung wird eine Fehlermeldung an den Benutzer ausgegeben, die einen Hinweis auf die aufgetretene Abweichung der Taktraten beinhaltet und es wird eine Abschaltung der Baugruppen vorgenommen, die aufgrund des Fehlers fehlerhafte Ausgangssignale liefern. Bei einer numerischen Steuerung für eine Werkzeugmaschine werden dabei insbesondere alle Antriebe stillgesetzt.

Alternativ kann der Schritt 1.6 auch im zweiten Kanal realisiert werden, so daß der Zähler 11.3 im zweiten Kanal den Zählerwert des ersten Kanals übernimmt.

In einer weiteren Ausgestaltung können die Taktraten in erstem und zweitem Kanal auch Vielfache voneinander sein. Dann muß die Änderung des Quotienten aus den beiden Taktraten in erstem und zweitem Kanal über der Zeit für einen fehlerfreien Betrieb innerhalb eines gewissen Toleranzbereichs liegen. Hierfür wird zumindest jeweils der zuletzt berechnete Quotient aus den beiden Taktraten im gemeinsamen Speicher 12 gespeichert und mit dem nächsten berechneten Quotienten verglichen. Die dabei ermittelte Änderung darf einen Grenzwert nicht überschreiten. Dadurch wird ermöglicht, daß unterschiedliche Taktraten in erstem und zweitem Kanal miteinander verglichen werden können. Es ist nicht erforderlich einen speziellen Teiler vorzusehen, um die Taktraten in erstem und zweitem Kanal auf den gleichen Wert zu bringen.

Liegt eine Fehlfunktion vor, so daß die Taktraten eines ersten Kanals wesentlich von denen eines zweiten Kanals abweichen, wird dies im Schrift 1.5 von einem ersten oder im Schrift 2.5 von einem zweiten Prozessor erkannt. Fällt eines der beiden Taktsignale vollständig aus, fällt auch der Prozessor, dem das Taktsignal zugeleitet wird aus. Dann wird der Fehler von dem Prozessor erkannt, dessen Taktsignal nicht ausgefallen ist, und es wird eine Fehlerbehandlung im Schritt 1.7 oder 2.6 durchgeführt.

In einer alternativen Ausgestaltungsmöglichkeit wird die zweikanalige Überwachung der Taktraten bei besonders zeitkritischen Steuerungs- und Regelungsaufgaben automatisch durch zumindest einen der beiden Prozessoren 10.2 oder 11.2 aktiviert. Die Notwendigkeit die Taktraten zu überwachen erkennt der Prozessor dabei an dem abzuarbeitenden Programmcode, der hierfür ausgewertet wird, oder an den unmittelbaren Benutzereingaben. Beim Überwachungsstart erfolgt zunächst eine Übernahme des Zählerwerts des einen Kanals durch den anderen Kanal, damit die Startwerte der Zähler in den beiden Kanälen identisch sind.

In einer weiteren alternativen Ausgestaltung wird der Zählerwert in einem der beiden Kanäle im Rahmen der zulässigen Toleranz und anhängig von der ermittelten Abweichung vom anderen Zählerwert korrigiert. Dadurch summieren sich nur unzulässig große Abweichungen der Zählerwerte auf. Dadurch kann der Toleranzbereich verkleinert werden oder es kann sogar die Gleichheit der beiden Zählerwerte überwacht werden.

In Figur 2 ist eine mögliche erfindungsgemäße Schaltungsanordnung dargestellt. In einem ersten Kanal ist ein Taktgenerator 10.0 zur Erzeugung eines Taktsignals mit einer benötigten Taktrate mit einem Teiler 10.1 verbunden.

Der Teiler 10.1 an dieser Stelle ist lediglich optional; außerdem können weitere Teiler an nahezu allen Stellen der Schaltungsanordnung vorgesehen sein, um die gerade benötigte Taktrate zu erzeugen. Das Ausgangssignal des Teilers 10.1 wird einem Prozessor 10.2 zugeleitet, der mit der durch den Teiler 10.1 eingestellten Taktrate betrieben wird. Der Prozessor 10.2 hat in der betrachteten numerischen Steuerung diverse Funktionen, so daß er zur Überwachung übereinstimmender Taktraten nur mitbenutzt wird. Der Prozessor 10.2 weist eine bidirektionale Verbindung zu einem Zähler 10.3 auf, über die insbesondere das Taktsignal des Prozessors 10.2 an den Zähler weitergeleitet wird und über die auch Zählerwerte bidirektional übertragen werden können. Dieser Zähler 10.3 zählt mit der vom Prozessor 10.2 zugeleiteten Taktrate. Weiterhin ist der Prozessor 10.2 mit einem Speicher 12 verbunden.

In einem im wesentlichen gleich aufgebauten zweiten Kanal ist ein Taktgenerator 11.0 zur Erzeugung eines Taktsignals mit einer benötigten Taktrate mit einem Teiler 11.1 verbunden. Auch der Teiler 11.1 an dieser Stelle ist lediglich optional; außerdem können weitere Teiler an nahezu allen Stellen der Schaltungsanordnung vorgesehen sein, um die gerade benötigte Taktrate zu erzeugen. Das Ausgangssignal des Teilers 11.1 wird einem Prozessor 11.2 zugeleitet, der mit der Taktrate des Ausgangssignals betrieben wird. Ebenso hat der Prozessor 11.2 in der betrachteten numerischen Steuerung diverse Funktionen, so daß er zur Überwachung übereinstimmender Taktraten nur mitbenutzt wird. Der Prozessor 11.2 weist eine bidirektionale Verbindung zu einem Zähler 11.3 auf, über die insbesondere das Taktsignal des Prozessors 11.2 an den Zähler weitergeleitet wird und über die auch Zählerwerte bidirektional übertragen werden können. Dieser Zähler zählt mit der vom Prozessor 11.2 zugeleiteten Taktrate. Weiterhin ist der Prozessor 11.2 ebenso wie der Prozessor 10.2 mit einem Speicher 12 verbunden.

In einer alternativen Ausgestaltung sind die Zähler 10.3 und 11.3 als Baugruppen der zugehörigen Prozessoren 10.2 bzw. 11.2 realisiert. Dies vereinfacht und beschleunigt den Datentransfer zwischen Prozessoren und Zählern wesentlich.

## Patentansprüche

1. Verfahren zur sicheren Überwachung von Taktraten in einem redundanten mehrkanaligen System, bei dem die Taktsignale in unabhängigen Taktsignalgeneratoren (10.0, 11.0) erzeugt (1.0, 2.0) und miteinander verglichen werden, dadurch gekennzeichnet, daß die Taktsignale mindestens zweier Kanäle unabhängigen Zählern (10.3, 11.3) zugeleitet werden, die mit der Taktrate zählen (1.2, 2.2), daß mindestens zwei Zähler (10.3, 11.3) im wesentlichen zeitlich synchron von Prozessoren (10.2, 11.2) ausgelesen werden (1.3, 2.3), daß die Prozessoren (10.2, 11.2) die ausgelesenen Zählerwerte über eine Schnittstelle (12) austauschen (1.4, 2.4), daß die Prozessoren (10.2, 11.2) mindestens einen über die Schnittstelle (12) ausgetauschten mit dem aus dem Zähler ausgelesenen Zählerwert vergleichen (1.5, 2.5) und daß bei Überschreiten eines Toleranzbereichs bezüglich des Unterschieds zwischen ausgetauschten und ausgelesenem Zählerwerten oder bei Überschreiten eines Toleranzbereichs bezüglich der Änderung des Quotienten aus ausgetauschten und ausgelesenem Zählerwerten eine Fehlerbehandlung durchgeführt wird (1.7, 2.6).

2. Verfahren nach Anspruch 1, dadurch gekennzeichnet, daß das Ausgangssignal der Taktsignalgeneratoren durch Teiler (10.1, 11.1) heruntergeteilt wird (1.1, 2.1).

3. Verfahren nach Anspruch 1 oder 2, dadurch gekennzeichnet, daß die mehrkanalige Überwachung der Taktsignale benutzergesteuert oder automatisch von mindestens einem der Prozessoren (10.2, 11.2) aktiviert wird und daß bei einem Start der Überwachung in alle anderen Zähler (10.3, 11.3) der Zählerwert eines Zählers (11.3, 10.3), der als Referenz benutzt wird, geladen wird.

4. Verfahren nach einem der Ansprüche 1 bis 3, dadurch gekennzeichnet, daß die Synchronisation des Auslesens der Zähler (10.3, 11.3) durch eine zeitliche Triggerung der Prozessoren (10.2, 11.2) erfolgt.

5. Verfahren nach einem der Ansprüche 1 bis 4, dadurch gekennzeichnet, daß geringfügige Abweichungen der Zählerwerte der Zähler (10.3, 11.3) korrigiert werden, wenn sie noch in einen Toleranzbereich fallen.

6. Verwendung des Verfahrens nach einem oder mehreren der Ansprüche 1 bis 5, dadurch gekennzeichnet, daß es in einer mehrkanalig ausgestalteten numerischen Steuerung verwendet wird.

7. Schaltungsanordnung zur sicheren Überwachung von Taktraten in einem redundanten mehrkanaligen System, dadurch gekennzeichnet, daß in jedem Kanal des Systems ein unabhängiger Taktsignalgenerator (10.0, 11.0) ein Taktsignal an einen Prozessor (10.2, 11.2) weiterleitet, daß jeder Prozessor (10.2, 11.2) bidirektional mit einem Zähler (10.3, 11.3) und einer Schnittstelle (12) verbunden ist.

8. Schaltungsanordnung nach Anspruch 7, dadurch gekennzeichnet, daß die Schnittstelle (12) für die Prozessoren (10.2, 11.2) durch einen gemeinsamen Speicher (12) realisiert wird oder daß eine direkte Verbindung über Lichtwellenleiter zwischen den Prozessoren (10.2, 11.2) vorgesehen ist.

9. Schaltungsanordnung nach Anspruch 7 oder 8, dadurch gekennzeichnet, daß die Zähler (10.3, 11.3) in den zugehörigen Prozessor (10.2, 11.2) integriert ausgeführt sind oder durch Softwarebaugruppen realisiert werden.
